# EUROPÄISCHE PATENTSCHRIFT

(11) **EP 2 724 068 B1**
(45) Veröffentlichungstag und Bekanntmachung des Hinweises auf die Patenterteilung: **03.02.2016**
(21) Anmeldenummer: 12707702.2
(22) Anmeldetag: 29.02.2012
(51) Int. Cl.: F16L 33/207

(54) **SCHLAUCHNIPPEL UND SCHLAUCHANORDNUNG**
HOSE NIPPLE AND HOSE ARRANGEMENT
RACCORD DE TUYAU FLEXIBLE ET SYSTÉME DE TUYAU FLEXIBLE CORRESPONDANT

(30) Priorität: 21.06.2011 DE 202011102083 U
(43) Veröffentlichungstag der Anmeldung: 30.04.2014
(73) Patentinhaber: Neoperl GmbH, 79379 Müllheim (DE)
(72) Erfinder: KURY, Werner, 79379 Müllheim (DE)
(74) Vertreter: Rummler, Felix
(86) Internationale Anmeldenummer: PCT/EP2012/000870
(87) Internationale Veröffentlichungsnummer: WO 2012/175148

(56) Entgegenhaltungen:
- EP-A1- 2 020 552
- EP-A1- 2 330 326
- US-A- 2 121 624
- US-A- 4 142 554
- US-A1- 2007 157 443
- US-A1- 2012 086 201

## Beschreibung

Die Erfindung betrifft einen Schlauchnippel für ein Schlauchanschlussstück eines wasserführenden Systems, mit einem hülsenförmigen Nippelgrundkörper, welcher eine Mündungsseite und eine Schlauchseite aufweist und, innenseitig einen die Mündungsseite und die Schlauchseite verbindenden Durchströmkanal aufnimmt, wobei an dem Nippelgrundkörper außenseitig wenigstens drei, jeweils um den Nippelgrundkörper zumindest abschnittsweise umlaufende, axial voneinander beabstandete Halterippen angeformt sind, wobei der Nippelgrundkörper verjüngend mit einem zur Schlauchseite hin abnehmenden Außendurchmesser ausgebildet ist, wobei die Halterippen mit ihren vom Nippelgrundkörper abragenden Rippenkämmen eine gedachte hülsen- oder schlauchförmige Hüllfläche beschreiben, deren Durchmesser zur Schlauchseite abnimmt, und wobei jeweils benachbarte Halterippen zueinander einen Axialabstand aufweisen.

Die Erfindung betrifft weiter eine Schlauchanordnung für ein wasserführendes System, mit einem Druckschlauch und einem Schlauchanschlussstück, welches einen Schlauchnippel und eine den Schlauchnippel und den Druckschlauch umgreifende Quetschhülse aufweist, wobei der Druckschlauch zwischen der Quetschhülse und dem Schlauchnippel kraft- und/oder formschlüssig gehalten ist.

Derartige Schlauchnippel und Schlauchanordnungen sind bekannt und werden häufig dort verwendet, wo ein flexibler Druckschlauch mit einem Schlauchanschlussstück versehen werden soll, um den Druckschlauch lösbar, aber druckfest an ein wasserführendes System anschließen zu können.

Aus der US 4 142 554 A ist bereits ein Schlauchnippel der eingangs erwähnten Art für ein Schlauchanschlussstück eines wasserführenden Systems vorbekannt. Der vorbekannte Schlauchnippel hat einen hülsenförmigen Nippelgrundkörper, der eine Mündungsseite und eine Schlauchseite aufweist und der innenseitig einen die Mündungsseite und die Schlauchseite verbindenden Durchströmkanal aufnimmt. An dem Nippelgrundkörper des vorbekannten Schlauchnippels sind außenseitig wenigstens drei, jeweils um den Nippelgrundkörper zumindest abschnittsweise umlaufende, axial voneinander beabstandete Halterippen angeformt. Der Nippelgrundkörper ist mit einem zur Schlauchseite hin abnehmenden Außendurchmesser verjüngend ausgebildet, wobei jeweils benachbarte Halterippen zueinander einen Axialabstand aufweisen und wobei die Halterippen mit ihren vom Nippelgrundkörper abragenden Rippenkämmen eine gedachte hülsen- oder schlauchförmige Hüllfläche beschreiben, deren Durchmesser zur Schlauchseite hin abnimmt. Dabei geben die voneinander beabstandeten Halterippen dem Schlauchnippel des vorbekannten Schlauchanschlussstückes eine wellenförmige Außenkontur. Diese wellenförmige Außenkontur der voneinander beabstandeten Halterippen vermag jedoch das auf den Schlauchnippel aufgeschobene Schlauchende der Schlauchleitung nur weniger gut auf dem Schlauchnippel zu halten, was regelmäßig durch eine entsprechende Länge des Schlauchnippels am vorbekannten Schlauchanschlussstück ausgeglichen werden soll.

Aus der EP 2 020 552 A1 ist bereits ein rohrförmiges Bauteil mit einem, ein Profil aufweisenden Endstück und mit einer an dem Endstück angeordneten Nut zur Aufnahme eines Dichtungselements vorbekannt. Das vorbekannte rohrförmige Bauteil ist dazu bestimmt, in ein Anschlussstück eingesteckt zu werden, das als Armatur, Muffe oder ein beliebiges anderes rohrförmiges Bauteil ausgestaltet sein kann. Dabei werden solche rohrförmigen Bauteile sowie die Anschlussstücke zu einem Gesamtsystem zusammengesetzt, das zur Führung eines Fluids bestimmt ist. Im Überlappungsbereich des Anschlussstücks und des in das Anschlussstück eingreifenden Endstücks des rohrförmigen Bauteils werden das Anschlussstück und das Endstück des rohrförmigen Bauteils üblicherweise kaltverformt, um so eine fluiddichte, kraftschlüssige Verbindung zwischen Anschlussstück und rohrförmigem Bauteil zu schaffen. Da zur Verbindung des rohrförmigen Bauteiles und des Anschlussstückes eine Kaltverformung dieser Bestandteile notwendig ist, ist das rohrförmige Bauteil nicht in Verbindung mit Schläuchen verwendbar, die regelmäßig aus einem elastischen Material hergestellt sind.

In der US 2,121,624 A ist bereits ein Schlauchnippel vorbeschrieben, der für ein Schlauchanschlussstück eines wasserführenden Systems vorgesehen ist. Der vorbekannte Schlauchnippel hat einen hülsenförmigen Nippelgrundkörper, der eine Mündungsseite und eine Schlauchseite aufweist und innenseitig einen die Mündungsseite und die Schlauchseite verbindenden Durchströmkanal aufnimmt. An den Nippelgrundkörper sind außenseitig mehrere, voneinander beabstandete und außenumfangsseitig gerundete Halterippen angeformt. Dabei ist der Nippelgrundkörper verjüngend mit einem zur Schlauchseite hin abnehmenden Außendurchmesser ausgebildet.

Aus der US 2003 / 004 794 3 A1 ist bereits eine Schlauchanordnung mit einer Schlauchkupplung vorbekannt, die ein hülsenförmiges Schlauchanschlussstück hat, dessen schlauchseitiger Hülsenendbereich einen Nippelgrundkörper bildet, auf welchen Nippelgrundkörper das eine Schlauchende eines flexiblen Schlauches bis zu einem Anschlagflansch aufgeschoben werden kann. An dem Anschlagflansch, der an der Außenseite des Schlauchanschlussstückes einstückig angeformt ist, ist eine Haltehülse gehalten, die zwischen sich und dem Schlauchanschlussstück einen Ringspalt umgrenzt, in welchem Ringspalt das auf den Nippelgrundkörper aufgeschobene Schlauchende eingespannt ist. Um das Schlauchende gegen axiale Zugkräfte sichern zu können, sind am Nippelgrundkörper einerseits und an dem den Ringspalt begrenzenden Teilbereich der Haltehülse andererseits mehrere voneinander beabstandete Halterippen vorgesehen, die sich innen- und außenseitig in das elastische Schlauchmaterial einformen können. Dabei sind die Axialabstände der am Nippelgrundkörper vorgesehenen Halterippen gruppenweise so bemessen, dass eine aus mehreren Halterippen gebildete erste Gruppe im Vergleich zu einer schlauchseitigen weiteren Gruppe von Halterippen einen größeren Axialabstand zueinander aufweisen. Um das Schlauchende im Ringspalt einspannen zu können, und um dazu den lichten Durchmesser der Haltehülse verringern zu können, weist die Haltehülse an ihrem Hülsenaußenumfang einen Konus auf, auf den eine Sicherungshülse aufschiebbar ist, die einen komplementär geformten Innenumfang hat. Die vorbekannte Schlauchanordnung besteht aus verschiedenen und teils nur mit einem erheblichen Aufwand herstellbaren Bestandteilen.

Der Erfindung liegt die Aufgabe zugrunde, den zur Herstellung einer druckfesten Verbindung zwischen Schlauchanschlussstück und Druckschlauch erforderlichen Materialeinsatz am Schlauchnippel unter Beibehaltung der benötigen Haltekraft zu reduzieren.

Die erfindungsgemäße Lösung dieser Aufgabe besteht bei dem Schlauchnippel der eingangs erwähnten Art insbesondere darin, dass die Axialabstände in der Abfolge der Halterippen an dem Nippelgrundkörper eine zur Schlauchseite abnehmende Zahlenfolge bilden, dass die Halterippen in einem Axialabschnitt des Schlauchnippels ein Profil mit einer der Schlauchseite zugewandten Vorderflanke und einer der Mündungsseite zugewandten Rückflanke aufweisen, dass zwischen der Vorderflanke und der Rückflanke ein Rippenkamm der Halterippen ausgebildet ist, dass die Vorderflanke im Profil einen S-förmigen Verlauf hat und mit einem ersten Übergangsradius in denNippelgrundkörper übergeht, und dass die Rückflanke gegenüber einer Senkrechten auf einer Außenfläche des Nippelgrundkörpers geneigt ist, und an ihrem Flankengrund mit einem zweiten Übergangsradius in den Nippelgrundkörper übergeht.

Der erfindungsgemäße Schlauchnippel weist einen Nippelgrundkörper auf, der verjüngend mit einem zur Schlauchseite hin abnehmenden Außendurchmesser ausgebildet ist. Hierbei ergibt sich die verjüngende Form des Nippelgrundkörpers durch die Abfolge der Außendurchmesser des Nippelgrundkörpers jeweils axial zwischen zwei benachbarten Halterippen, also durch gedankliches Weglassen der außen angeformten Halterippen des Schlauchnippels. Mit der Erfindung wird erreicht, dass der Krafteintrag von den einzelnen Halterippen eines Schlauchnippels gleichmäßiger als Haltekraft in den auf den Schlauchnippel aufgeschobenen Druckschlauch einbringbar ist. Hierdurch wird der Materialeinsatz für einen Schlauchnippel deutlich reduziert, da die Halterippen axial enger zusammengerückt ausgebildet werden können, wodurch der Schlauchnippel axial deutlich kürzer fertigbar ist.

Erfindungsgemäß ist vorgesehen, dass die Axialabstände in der Abfolge der Halterippen an den Nippelgrundkörper eine zur Schlauchseite abnehmende Zahlenfolge bilden. Dadurch wird erreicht, dass die Halterippen am schlauchseitigen Ende des Schlauchnippels enger in axialer Richtung nebeneinander angeordnet sind, als am mündungsseitigen Ende des Schlauchnippels. Versuche haben ergeben, dass durch die andere Rippenform und das axiale Zusammenrücken der Halterippen die benötigte Haltekraft für den Druckschlauch trotz Verkürzung des Schlauchnippels in axialer Richtung erreicht werden kann. Somit ist der Materialeinsatz für die Schlauchnippel reduzierbar.

Da die Halterippen mit ihren vom Nippelgrundkörper abragenden Rippenkämmen eine gedachte hülsen- oder schlauchförmige Hüllfläche beschreiben, deren Durchmesser zur Schlauchseite hin abnimmt, greifen die Halterippen am Material des Druckschlauches nicht axial hintereinander in einer Linie, sondern radial nebeneinander und somit axial versetzt und parallel an, was bei gegebener Rippengröße die insgesamt aufbringbare Haltekraft erhöht oder umgekehrt bei vorgegebener erforderlicher Haltekraft verkleinerte Halterippen und somit verminderten Materialeinsatz ermöglicht.

Dies kann beispielsweise dadurch erreicht werden, dass der Nippelgrundkörper zur Schlauchseite des Schlauchnippels hin verjüngend ausgeformt ist oder dass die Halterippenhöhe zur Schlauchseite hin von Halterippe zu Halterippe reduziert ausgeführt ist oder indem diese Merkmale miteinander und/oder mit weiteren Merkmalen kombiniert werden, um die Hüllfläche als gedachte geometrische Fläche zu beschreiben.

Erfindungsgemäß ist vorgesehen, dass die Halterippen in einem Axialschnitt des Schlauchnippels ein Profil mit einer der Schlauchseite zugewandten Vorderflanke und einer der Mündungsseite zugewandten Rückflanke aufweisen, dass zwischen der Vorderflanke und der Rückflanke ein Rippenkamm der Halterippen ausgebildet ist, dass die Vorderflanke im Profil einen S-förmigen Verlauf hat und mit einem ersten Übergangsradius in den Nippelgrundkörper übergeht und dass die Rückflanke gegenüber einer Senkrechten auf einer Außenfläche des Nippelgrundkörpers geneigt ist und an ihrem Flankengrund mit einem zweiten Übergangsradius in den Nippelgrundkörper übergeht.

Durch diese von der üblichen Trapezform des Profils abweichenden Kontur ergibt sich eine besonders günstige Haltkraft-Übertragung von den Halterippen an den Druckschlauch. Während die S-förmige Vorderflanke ein Aufstecken des Druckschlauchs erleichtert, sorgt die mit einem stumpfen Winkel gegenüber der senkrechten geneigte Rückflanke dafür, dass der in Einsteckrichtung hinter der Rückflanke kontrahierte Druckschlauch möglichst großflächig an der Rückflanke anliegt und so eine optimale Kraftübertragung ermöglicht. Die Ausbildung des Übergangsradius an der Rückflanke bewirkt vorteilhaft, dass der Druckschlauch an der Rückflanke großflächig anliegt. Somit werden ungenutzte, unter Hohlräumen liegende Oberflächen der Halterippen vermieden. Die Halterippe kann daher so klein wie möglich dimensioniert werden.

Besonders günstig ist es, wenn der Nippelgrundkörper außenseitig eine sich zur Schlauchseite hin verjüngende Konusform aufweist.

Bei einer Ausgestaltung der Erfindung kann vorgesehen sein, dass der erste Übergangsradius größer als der zweite Übergangsradius ist. Somit erleichtert der erste Übergangsradius nochmals das Aufstecken, während der an der Rückflanke ausgebildete zweite Übergangsradius ein Zurückrutschen des aufgesteckten Druckschlauchs verhindert.

Vorteilhaft kann es sein, wenn die Halterippe in einem Axialschnitt des Schlauchnippels ein krummlinig begrenztes, dreieckiges Profil mit einer abgerundeten, vom Nippelgrundkörper abragenden Spitze aufweist. Versuche haben ergeben, dass der plateauförmige Übergangsbereich, welcher bei den Halterippen bekannter Schlauchnippel zwischen der Vorderflanke und der Rückflanke üblicherweise ausgebildet ist, für die Entwicklung und Einbringung einer gewünschten Haltekraft vom Schlauchnippel auf einen aufgesteckten Druckschlauch nicht zwingend erforderlich ist. Die abgerundete Ausführung der Spitze hat den Vorteil, dass sich die Halterippe nicht in den Druckschlauch einschneidet, sondern dass der Druckschlauch im Wesentlichen unverletzt an der Halterippe anliegen kann. Dies verbessert die Halteeigenschaften nochmals, so dass auch mit geringerem Materialeinsatz eine gewünschte Haltekraft in den Druckschlauch eingebracht werden kann.

Eine weitere vorteilhafte Ausführungsform gemäß der Erfindung sieht vor, dass jede Halterippe mit einer jeweiligen Halterippenhöhe vom Nippelgrundkörper abragt und dass die Halterippenhöhen in der Abfolge der Halterippen an dem Nippelgrundkörper eine zur Schlauchseite abnehmenden Zahlenfolge bilden. Von Vorteil ist dabei, dass auf diese Weise die Angriffspunkte, an welchen der Druckschlauch jeweils an den Halterippen zu einem wesentlichen Teil gehalten wird, über die Materialstärke des Druckschlauchs verteilt werden können, so dass die von den Halterippen in den Druckschlauch eingebrachten Kraftlinien nicht zusammenfallen, sondern im Druckschlauch parallel zueinander verlaufen. Dies bietet den Vorteil, dass die einzelnen Halterippen in ihrer Größe gegenüber den Halterippen bekannter Schlauchnippel reduziert ausgeführt werden können, wodurch der Materialeinsatz zur Fertigung des Schlauchnippels bei beibehaltener Haltekraft vermindert werden kann.

Besonders günstige Ausgestaltungen ergeben sich durch Kombination einzelner oder aller vorgestellter Lösungen der genannten Aufgabe, da in diesem Fall der Materialeinsatz besonders gering ist.

Bei einer Ausgestaltung der Erfindung kann vorgesehen sein, dass der Durchströmkanal zwischen der Schlauchseite und der Mündungsseite einen konstanten oder einheitlichen Innendurchmesser aufweist. Von Vorteil ist dabei, dass der Durchströmkanal mit einem einfachen Fertigungsvorgang wie Bohren oder Fräsen mit geringem Aufwand ausgebildet werden kann.

Die wenigstens eine Halterippe kann an dem Nippelgrundkörper durchgängig umlaufend ausgebildet sein. Somit ist die Hälterippe durch eine Drehbearbeitung ausbildbar.

Es kann auch vorgesehen sein, dass an der Halterippe in Umfangsrichtung Unterbrechungen ausgebildet sind. Durch die Unterbrechungen ist die Halterippe in Halterippensegmente unterteilt, die sich jeweils entlang eines Umfangsabschnitts erstrecken. Es kann vorgesehen sein, dass die Unterbrechungen der Halterippe durch Abflachungen der Halterippenhöhe ausgebildet sind. Somit ist die Halterippenhöhe in Umfangsrichtung nicht konstant, sondern im Bereich der Unterbrechungen reduziert, vorzugsweise auf das Niveau des Nippelgrundkörpers. Von Vorteil ist bei dieser Ausgestaltung, dass die Verdrängungsarbeit, welche zum Einpressen der Halterippen in das Material des Druckschlauches erforderlich ist, reduzierbar ist. Somit ist die Beanspruchung des Nippelgrundkörpers beim Vercrimpen reduzierbar, und es sind dünnere Materialstärken für den Nippelgrundkörper verwendbar.

Besonders günstig ist es, wenn die Unterbrechungen an benachbarten Halterippen gegeneinander um einen Drehwinkel drehversetzt ausgebildet sind. Von Vorteil ist dabei, dass sich Umfangsabschnitte der Halterippensegmente der einzelnen Halterippen in einer axialen Projektion überlappen können, so dass in der Projektion keine Unterbrechungen ohne Halterippensegment bleiben. Es kann somit erreicht werden, dass der Druckschlauch in jedem Umfangsabschnitt durch wenigstens ein Halterippensegment formschlüssig gehalten ist.

Bevorzugt ist wenigstens ein Umfangsabschnitt an dem Nippelgrundkörper geschaffen, in dem sich Unterbrechungen an einer Halterippe mit Halterippensegmenten an den benachbarten Halterippen in axialer Richtung abwechseln. Es ist somit in axialer Richtung eine Folge Unterbrechung-Halterippensegment-Unterbrechung usw. bildbar. Somit wird eine durch die Unterbrechung axial verlaufende Anlagefläche für den Druckschlauch geschaffen, die sich zwischen den zu der mittleren Halterippe benachbarten Halterippen erstreckt. Die Anlagefläche weist somit eine axiale Erstreckungslänge auf, welche ungefähr doppelt so lang ist wie der Halterippenabstand zwischen zwei Halterippen. Somit ist die Scherfläche zur Aufnahme von Scherkräften vergrößerbar. Es kann auch vorgesehen sein, dass in einer axialen Verbindungslinie zwischen zwei Unterbrechungen, die an axial voneinander beabstandeten Halterippen ausgebildet sind, wenigstens ein Halterippensegment ausgebildet ist. Ebenso kann vorgesehen sein, dass in einer axialen Verbindungslinie zwischen zwei Halterippensegmenten, die an axial voneinander beabstandeten Halterippen ausgebildet sind, wenigstens eine Unterbrechung ausgebildet ist. Somit kann erreicht werden, dass die durch eine Unterbrechung gebildete Lücke oder Unterbrechung einer Halterippe durch wenigstens ein Halterippensegment an einer benachbarten Halterippe in axialer Richtung verdeckt wird.

Zur Lösung der genannten Aufgabe ist bei einer Schlauchanordnung der eingangs genannten Art vorgesehen, dass der Schlauchnippel erfindungsgemäß ausgebildet ist. Somit ist eine Schlauchanordnung bereitgestellt, bei welcher der Schlauchnippel unter Beibehaltung einer gewünschten Druckfestigkeit mit möglichst geringem Materialeinsatz gefertigt werden kann.

Besonders günstig ist es, wenn die Quetschhülse einen Crimpabschnitt aufweist, welcher sich axial wenigstens bis zur axialen Position der Schlauchseite des Schlauchnippels erstreckt. Von Vorteil ist dabei, dass auf diese Weise die gesamte Axiallänge des in dem Druckschlauch eingesteckten Schlauchnippels für die Ausbildung der kraft- und/oder formschlüssigen Verbindung zwischen Druckschlauch und Schlauchnippel nutzbar ist. Über die Quetsch- oder Crimphülse axial überstehende Teile des Schlauchnippels sind daher vermeidbar, wodurch der erforderliche Materialeinsatz zur Fertigung des Schlauchnippels nochmals gegenüber bekannten Schlauchnippeln reduzierbar ist.

Bei einer Ausgestaltung der Erfindung kann vorgesehen sein, dass jede Halterippe den aufgesteckten Druckschlauch jeweils auf eine verbleibende radiale Materialstärke reduziert und dass die verbleibende radialen Materialstärken in der Abfolge der Halterippen an dem Nippelgrundkörper eine zur Schlauchseite zunehmende Zahlenfolge bilden. Somit wird erreicht, dass im axialen Verlauf zur Schlauchseite des Schlauchnippels hin -an den Halterippen gegenüber der jeweils vorangehenden Halterippe mehr Material zwischen der Außenseite des aufgesteckten Druckschlauchs und der abragenden Spitze bzw. dem abragenden Rippenkamm der Halterippe verbleibt, so dass die Zugbelastung von jeder Halterippe an der jeweils zur Schlauchseite hin folgenden Halterippe im Material des Druckschlauches vorbeigeleitet werden kann. Diese Anordnung ist besonders günstig für eine parallele Krafteinleitung der Haltekräfte von den Halterippen in dem aufgesteckten Druckschlauch.

Eine besonders gute Materialausnutzung am Druckschlauch kann erreicht werden, wenn die oder eine Halterippenhöhe einer ersten Halterippe und die oder eine Halterippenhöhe einer mündungsseitig benachbarten Halterippe im Verhältnis so zueinander und zu dem oder einem Axialabstand der ersten Halterippe zur mündungsseitig benachbarten Halterippe gewählt sind, dass die von dem Druckschlauch im Bereich der ersten Halterippe mit der reduzierten Materialstärke aufnehmbaren Zugkraft wenigstens gleich oder genau gleich der Summe der von dem Druckschlauch im Bereich der mündungsseitig benachbarten Halterippe mit der reduzierten Materialstärke aufnehmbare Zugkraft und der von dem Druckschlauch im Bereich zwischen der ersten Halterippe und der mündungsseitig benachbarten Halterippe aufnehmbaren Scherkraft ist. Somit wird auf einfache Weise erreicht, dass der jeweilige Materialeinsatz an den Halterippen sowohl auf Schlauchnippelseite als auch auf Druckschlauchseite optimal gewählt ist. Denn die maximale Belastung, bei welcher der aufgesteckte Druckschlauch an der ersten Halterippe reißen würde, ist durch die Ausgestaltung gerade genauso groß, wie die Belastung, bei welcher der Druckschlauch an der mündungsseitig benachbarten Halterippe reißen würde, wobei in letzterem Fall der Druckschlauch noch zusätzlich zwischen den beiden genannten Halterippen auf der radialen Höhe der ersten Halterippe abgeschert werden müsste. Die Erfindung wird nun anhand eines Ausführungsbeispiels näher beschrieben, ist jedoch nicht auf dieses Ausführungsbeispiel beschränkt. Vielmehr zeigt das Ausführungsbeispiel eine bevorzugte Ausgestaltung, bei welcher die vorgestellten Lösungen der genannten Aufgabe derart kombiniert sind, dass sich ein insgesamt möglichst geringer Materialbedarf für den Schlauchnippel ergibt. Weitere Ausführungsbeispiele ergeben sich durch Kombination einzelner oder mehrerer Merkmale der Schutzansprüche untereinander und/oder mit einzelnen oder mehreren Merkmalen des Ausführungsbeispiels.

Es zeigt:
- Fig. 1: eine Schlauchanordnung nach dem Stand der Technik,
- Fig. 2: ein Schlauchnippel nach dem Stand der Technik gemäß Fig. 1,
- Fig. 3: eine vergrößerte Detaildarstellung aus der Schlauchanordnung gemäß Fig. 1,
- Fig. 4: eine nochmals vergrößerte Detaildarstellung aus Fig. 3,
- Fig. 5: eine erfindungsgemäße Schlauchanordnung,
- Fig. 6: einen erfindungsgemäßen Schlauchnippel aus der erfindungsgemäßen Schlauchanordnung gemäß Fig. 5 in Einzeldarstellung,
- Fig. 7: eine Detailvergrößerung der Schlauchanordnung gemäß Fig. 5,
- Fig. 8: eine Detailvergrößerung aus Fig. 7 mit einer erfindungsgemäßen Halterippe eines erfindungsgemäßen Schlauchnippels,
- Fig. 9: eine vergrößerte Darstellung der Fig. 7,
- Fig. 10: einen weiteren erfindungsgemäßen Schlauchnippel mit unterbrochen umlaufenden Halterippen in einer Seitenansicht,
- Fig. 11: den Schlauchnippel aus Fig. 10 in einer Axialschnittdarstellung,
- Fig. 12: den Schlauchnippel aus Fig. 10 in einer Gegenüberstellung der Seitenansicht gemäß Fig. 10 mit der Schnittansicht gemäß Fig. 11 und
- Fig. 13: den Schlauchnippel aus Fig. 10 in einer dreidimensionalen Schrägansicht.

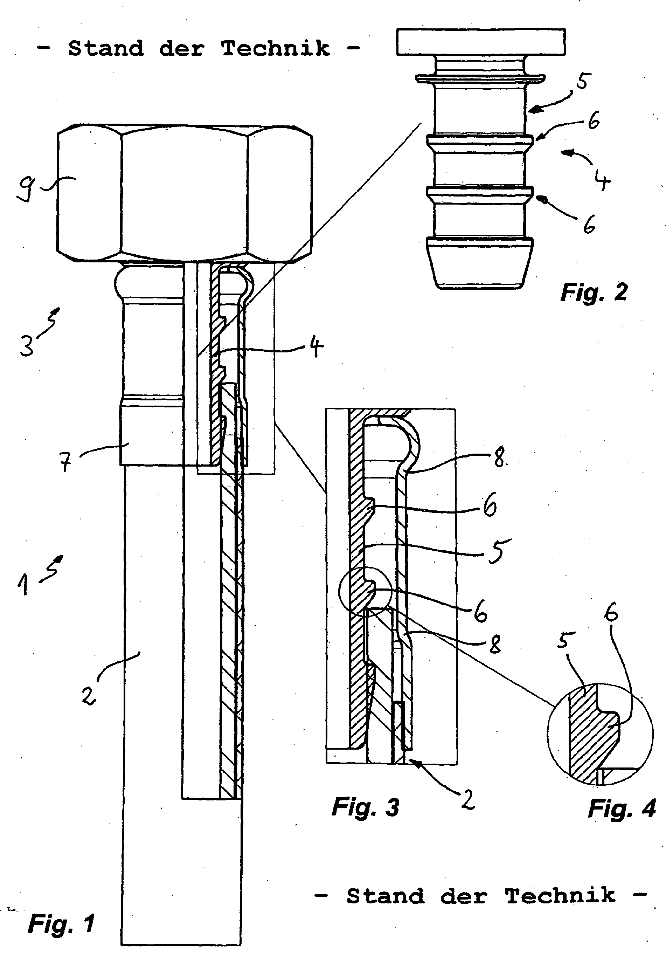

Fig. 1 bis 4 zeigen eine im Ganzen mit 1 bezeichnete Schlauchanordnung nach dem Stand der Technik.

Die Schlauchanordnung 1 weist einen Druckschlauch 2 und ein an einem Ende des Druckschlauchs 2 befestigtes Schlauchanschlussstück 3 auf.

Das Schlauchanschlussstück 3 weist einen Schlauchnippel 4 auf, welcher einen zylindrischen Nippelgrundkörper 5 mit einer zylindrischen Innenfläche und einer zylindrischen Außenfläche hat.

An dem Nippelgrundkörper 5 sind außenseitig um den Nippelgrundkörper 5 durchgängig umlaufende Halterippen 6 ausgebildet. Die Halterippen 6 weisen zueinander einen einheitlichen axialen Abstand und eine einheitliche Halterippenhöhe auf. Die Halterippen 6 sind ferner mit identischem, trapezförmigem Querschnittsprofil ausgebildet.

Der Schlauchnippel 4 wird in das Ende des Druckschlauchs 2 eingesteckt, und eine Quetschhülse 7 umgreift den Druckschlauch 2 mit dem eingesteckten Schlauchnippel 4.

Die Quetschhülse 7 ist zwischen den Enden 8 eines Crimpbereiches gecrimpt, so dass die Halterippen 6 einen formschlüssigen Halt des vollständig eingesteckten Druckschlauches 2 bewirken.

Eine Mutter ist als Befestigungselement 9 in an sich bekannter Weise an dem mündungsseitigen Ende des Schlauchnippels 4 befestigt.

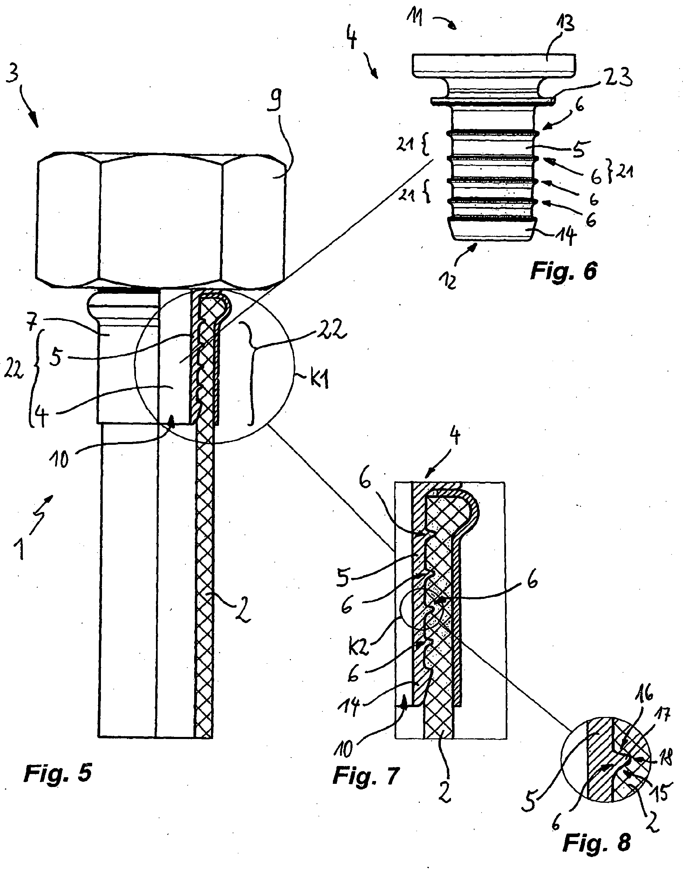

Fig. 5 bis Fig. 9 zeigen eine erfindungsgemäße Schlauchanordnung 1.

Die erfindungsgemäße Schlauchanordnung 1 hat einen Druckschlauch 2, an welchem ein Schlauchanschlussstück 3 kraftund/oder formschlüssig gehalten ist.

Fig. 7 gibt eine Detailvergrößerung des Kreises K1 aus Fig. 5 wieder.

Fig.8 gibt eine nochmalige Detailvergrößerung des Kreisausschnitts K2 aus Fig. 7 wieder.

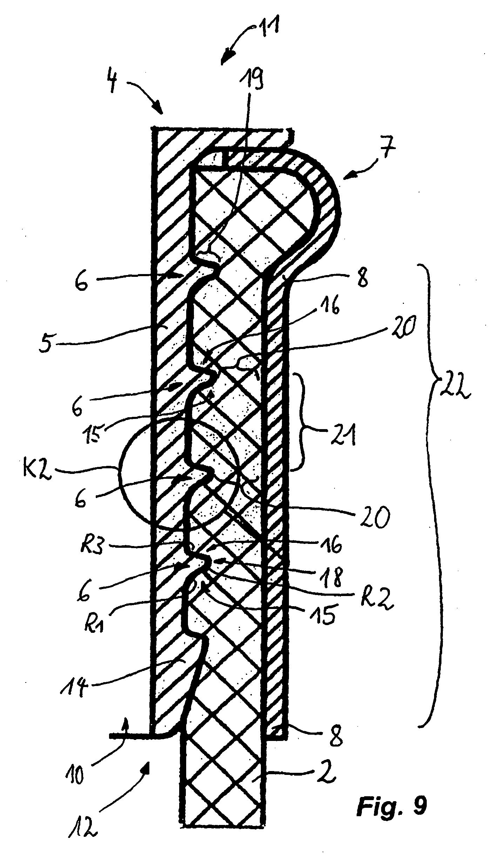

Fig.9 ist eine nochmalige Vergrößerung der Fig. 7.

Fig. 7, Fig. 8 und Fig. 9 sowie teilweise Fig. 5 zeigen Einzelheiten der erfindungsgemäßen Schlauchanordnung 1 in einem Axialschnitt.

Das Schlauchanschlussstück 3 in Fig. 5 hat einen Schlauchnippel 4, welcher in Fig. 6 separat dargestellt ist.

Insbesondere in der partiellen Schnittdarstellung gemäß Fig. 5 ist ersichtlich, dass der Schlauchnippel 4 einen hülsenförmigen Nippelgrundkörper 5 aufweist, welcher einen im Inneren des Schlauchnippels 4 verlaufenden Durchströmkanal 10 in radialer Richtung umgibt und begrenzt.

Der Durchströmkanal 10 verläuft zwischen der Mündungsseite 11 und der Schlauchseite 12 des Schlauchnippels 4 und dient zur Durchleitung der in dem wasserführenden System geleiteten Flüssigkeit.

An der Mündungsseite 11 des Schlauchnippels 4 ist ein Nippelflansch 13 ausgebildet, welcher einen dichten Anschluss an das wasserführende System ermöglicht und welcher das Befestigungselement 9 hält.

Statt der beispielhaft dargestellten Mutter können auch andere Befestigungselemente 9 an dem Schlauchnippel 4 ausgebildet oder befestigt sein, beispielsweise Befestigungselemente mit Außengewinde.

Der Schlauchnippel 4 wird zum Gebrauch, also zur Herstellung der Verbindung zwischen Schlauchanschlussstück 3 und Druck schlauch 2, mit seiner Schlauchseite 12 voran in den Druckschlauch 2 eingesteckt, wobei eine Einsteckhilfe 14 am schlauchseitigen Ende des Schlauchnippels 4 das Einstecken erleichtert. Hierzu weist die Einsteckhilfe 14 einen Außenkonus auf.

Zur Bewirkung eines Formschlusses zwischen Schlauchnippel 4 und Druckschlauch 2 sind an dem Nippelgrundkörper 5 außenseitig vier Halterippen 6 angeformt.

Bei weiteren Ausführungsbeispielen können auch andere Anzahlen von Halterippen 6 realisiert sein.

Die Halterippen 6 erstrecken sich jeweils durchgängig entlang des vollständigen Umfangs des Nippelgrundkörpers 5 an dessen Außenseite und umlaufen diesen daher.

Die Halterippen 6 sind vom schlauchseitigen Ende 12 des Schlauchnippels 4 beabstandet ausgebildet und graben sich in Gebrauchsstellung in das Material des Druckschlauches 2 ein, um den Formschluss zu bewirken.

Der Nippelgrundkörper 5 des erfindungsgemäßen Schlauchnippels 4, welcher sich durch gedankliches Weglassen der Halterippen 6 und der Einsteckhilfe 14 von dem Schlauchnippel 4 ergibt, weist eine Hülsenform auf, welche von der Zylinderform dadurch abweicht, dass der Außendurchmesser des Nippelgrundkörpers 5 zur Schlauchseite 12 zu abnimmt. Dies bedeutet, dass der Nippelgrundkörper 5 von der Mündungsseite 11 weg außenseitig eine verjüngende Form aufweist.

Dies ist bei dem Schlauchnippel 4 gemäß Fig. 6 dadurch erreicht, dass der Nippelgrundkörper 5 außenseitig eine Konusform aufweist, deren verjüngtes Ende an der Schlauchseite 12 liegt. Innenseitig weist die Hülsenform des Nippelgrundkörpers 5 dagegen eine Zylinderform auf, da der Durchströmkanal 10 mit einheitlichem Innendurchmesser gebohrt ist.

Daher nimmt die Materialstärke des Nippelgrundkörpers im axialen Verlauf zwischen der Mündungsseite 11 und der Schlauchseite 12 ab.

In den Vergrößerungen gemäß Fig. 8 und Fig. 9 ist ersichtlich, dass die Halterippen 6 in den gezeigten Axialschnitten ein Axialprofil aufweisen, welches von der bekannten Trapezform (vgl. Fig. 4) abweicht.

Das Profil der Halterippen 6 weist jeweils eine Vorderflanke 15 und eine Rückflanke 16 auf, zwischen denen an der abragenden Spitze der um den Nippelgrundkörper 5 in Umfangsrichtung umlaufenden Rippenkamm 18 ausgebildet ist. Die Vorderflanke 15 kommt hierbei während des Einsteckens mit dem Material des Druckschlauchs 2 zuerst in Kontakt.

Um dieses Einstecken zu erleichtern, sind die Vorderflanken 15 im Profil mit einem S-förmigen Verlauf ausgebildet, wobei sich ein in den Nippelgrundkörper 5 übergehender Übergangsradius R1 von einem Übergangsradius R2 mit entgegengesetzter Krümmung gefolgt wird. An den Übergangsradius R2 schließt sich im weiteren Verlauf des Profils der Rippenkamm 18 an, welcher den am weitesten abragenden Punkt der Halterippe 6 bezeichnet.

Die Rückflanke 16 ist im Wesentlichen als konischer Kreisring ausgebildet, welcher gegenüber einer Senkrechten auf der Außenfläche des Nippelgrundkörpers 5 derart geneigt ist, dass sich ein stumpfer Winkel ergibt. Die Rückflanke 16 geht mit einem Radius R3 in den Nippelgrundkörper über, wobei der Krümmungsradius R3 kleiner als der Krümmungsradius des Übergangsradius R1 gewählt ist.

Die Halterippen 6 sind nicht identisch ausgebildet, sondern weisen zueinander lediglich ein geometrisch ähnliches Profil auf, welches ein krummlinig begrenztes Dreieck bildet, dessen eine Spitze 17 vom Nippelgrundkörper 5 abragt und abgerundet ist.

Die Spitze 17, welche den Rippenkamm 18 ausbildet oder definiert, gräbt sich in Gebrauchsstellung in den am Nippelgrundkörper 5 anliegenden Druckschlauch 2 ein, so dass die Rückflanke 16 einen formschlüssigen Halt des Druckschlauchs 2 und die freien Außenseiten des Nippelgrundkörpers 5 zwischen den Halterippen 6 einen kraftschlüssigen Halt des Druckschlauchs 2 bewirken können.

Der hierfür notwendige Anpressdruck des Druckschlauchs 2 wird durch die auf den Druckschlauch 2 aufgesteckte Quetschhülse 7 verstärkt, welche in dem durch die Enden 8 begrenzten Crimpbereich 22 vercrimpt ist.

Bei der erfindungsgemäßen Schlauchanordnung erstreckt sich der Crimpbereich oder Crimpabschnitt 22 somit bis über das Ende des Schlauchnippels 4 an der Schlauchseite 12 in axialer Richtung hinaus.

In Fig. 9 ist näher ersichtlich, dass jede der Halterippen 6 mit einer Halterippenhöhe 19 vom Nippelgrundkörper 5 abragt, wobei zur Vereinfachung der Darstellung diese Halterippenhöhe 19 nur für die zur Mündungsseite 11 erste Halterippe 6 bezeichnet ist.

Die jeweiligen Halterippenhöhen 19 der einzelnen Halterippen 6 nehmen von der Mündungsseite 11 zu der Schlauchseite 12 hin ab, so dass sich in der Abfolge der Halterippen 6 eine zur Schlauchseite 12 hin abnehmende Zahlenfolge (in Fig. 9 aus vier Elementen) ergibt.

Die vom Nippelgrundkörper 5 abragenden Rippenkämme 18 beschreiben somit eine gedachte hülsen- oder schlauchförmige Hüllfläche, deren Durchmesser zur Schlauchseite 12 hin konisch verjüngend abnimmt.

Trägt man bei dem vorgestellten Ausführungsbeispiel die Halterippenhöhen 19 als Funktion der axialen Position der zugehörigen Halterippe 6 auf, so ergibt sich eine Gerade.

Da die Quetschhülse 7 in ihrem Crimpabschnitt 22 zwischen den Enden 8 einen im wesentlichen zylinderförmigen Verlauf aufweist, bedeutet dies, dass die radiale Materialstärke 20, auf welche der Druckschlauch 2 durch die sich eingrabenden Halterippen 6 jeweils reduziert wird, von der Mündungsseite 11 zur Schlauchseite 1 hin zunimmt.

Aus Fig. 9 ist ferner ersichtlich, dass die Halterippen 6 zur Mündungsseite 11 hin untereinander einen größeren Axialabstand aufweisen.

Die weiter schlauchseitig angeordneten Halterippen 6 sind somit enger in axialer Richtung von einander beabstandet, als die weiter mündungsseitig angeordneten Halterippen 6.

Hierdurch bilden die Axialabstände 21 der Halterippen in der Abfolge der Halterippen 6 an dem Nippelgrundkörper 5 eine zur Schlauchseite 12 abnehmende Zahlenfolge (im Beispiel aus drei Elementen).

Auch der Axialabstand zwischen der Halterippe 6, welche zu der Einsteckhilfe 14 benachbart ist, und der Rückflanke der Einsteckhilfe 14 ist gegenüber den übrigen Axialabständen 21 kleiner ausgebildet, so dass die erwähnte, abnehmende Zahlenfolge hierdurch fortgesetzt wird.

Als Anschlag für den mit der Quetschhülse 7 auf den Schlauchnippel 4 aufgesteckten Druckschlauch 2 ist an dem Schlauchnippel 4 ein umlaufender Nippelkragen 23 ausgebildet, welcher auch den Nippelgrundkörper 5 begrenzt. Dieser in Fig. 6 näher ersichtliche Nippelkragen 23 dient gleichzeitig beim Einpressen des Schlauchnippels 4 als Anschlag für das Schlauchende des Druckschlauchs.

Durch die Kombination der Gestaltung der Halterippen 6 und der Außenseite des Nippelgrundkörpers 5 wird erreicht, dass bei einem Paar von benachbarten Halterippen 6 die jeweils näher zur Mündungsseite 11 gelegene Halterippe 6 die jeweils näher zur Schlauchseite 12 gelegene Halterippe 6 radial überragt, so dass eine von dem Rippenkamm 18 einer Halterippe 6 in den Druckschlauch 2 zur Schlauchseite 12 hin verlaufende, axial ausgerichtete und somit auf einer zum Schlauchnippel 4 koaxialen Zylinderfläche verlaufende Kraftlinie nicht die zwischen dieser Halterippe 6 und der Schlauchseite 12 gelegenen übrigen Halterippen 6 berührt.

Somit verlaufen die jeweils konstruierten Kraftlinien im Druckschlauch 2 parallel zueinander und ergeben somit einen besonders günstigen Krafteintrag von dem Schlauchnppel 4 auf den Druckschlauch 2.

Bei dem gezeigten Ausführungsbeispiel sind die Halterippenhöhen 19 von benachbarten Halterippen 6 im Verhältnis zueinander und im Verhältnis zu dem Axialabstand 21 der Halterippen so gewählt, dass die Materialfestigkeit des Druckschlauches 2 optimal ausgenutzt werden kann.

Denn die Halterippenhöhen 19 sind jeweils so gewählt, dass die Kraft, die als maximale Zugkraft nötig wäre, um den Druckschlauch an einer ausgewählten Halterippe 6 in dem Bereich der reduzierten Materialstärke 20 abzureisen, genauso groß ist wie die Summe der Kräfte, die als maximale Zug- bzw. Scherkraft erforderlich sind, um einerseits den Druckschlauch 12 an der in Richtung Mündungsseite 11 benachbarten und axial nachfolgenden Halterippe 6 abzureisen und andererseits den Druckschlauch 2 in dem Bereich des Axialabstands 21 zwischen den betrachtete Halterippen 6 derart abzuscheren, dass das an der Rückflanke 16 im "Schatten" der Halterippe 6 anliegende Material des Druckschlauchs 2 als ringförmiger Rest auf dem Schlauchnippel 4 verbleibt.

Die von den Bereichen reduzierter Materialstärke 20 aufnehmbaren Zugkräfte sind somit auf die zwischen den Halterippen 6 aufnehmbaren Scherkräfte abgestimmt, indem die Halterippenhöhe 19, die Axialabstände 21 und die Materialdicke des Druckschlauchs 2 entsprechend den Materialeigenschaften des Druckschlauchs 2 festgelegt sind.

Bei den aus dem Stand der Technik bekannten Schlauchnippeln der Größe DN6 erstreckt sich der zylindrische Nippelgrundkörper zwischen einem Durchmessermaß von 4,7 mm bis 6,1 mm. Daran schließen sich die Halterippen bis zu einem Durchmesser von 7,2 mm an.

Der Druckschlauch 2 hat bei der Größe DN6 inklusive einer Fertigungstoleranz einen minimalen Durchmesser von 6,1 mm und erstreckt sich bis zu einem Durchmesser von 9,6 mm, wobei zwischen dem Durchmesserbereich 9,0 mm bis 9,6 mm ein Hüllschlauch vorgesehen ist.

Eine aus dem Stand der Technik als DN8 bekannte Schlauchanordnung hat ein Schlauchnippel, dessen Nippelgrundkörper einen einheitlichen Innendurchmesser von 6,2 mm und einen einheitlichen Außendurchmesser von 7,7 mm aufweist.

An den Nippelgrundkörper schließen sich bei der Größe DN8 die Halterippen bis zu einem Durchmesser von 9,0 mm an.

Auf diesen Schlauchnippel passt ein Schlauch, welcher sich inklusive einem Toleranzbereich von einem Innendurchmesser von 7,9 mm bis zu einem Außendurchmesser von 11,6 mm erstreckt.

Bei dem erfindungsgemäßen Schlauchnippel weist der Nippelgrundkörper in einer bevorzugten Ausführungsform einen einheitlichen Innendurchmesser von 5,8 mm auf, während der Außendurchmesser des Nippelgrundkörpers von einem Wert von 7,0 mm nahe der Mündungsseite auf einen Wert von 7,3 mm nahe der Schlauchseite des Schlauchnippels ansteigt.

Ebenso steigt das Maß für die radiale Halterippenhöhe in diesem Beispiel von einem Wert von 0,4 mm nahe der Mündungsseite auf einen Wert von 0,45 mm nahe der Schlauchseite des Schlauchnippels an.

Hierzu passt ein Druckschlauch, welcher einen Innendurchmesser von 7,4 +/- 0,3 mm und einen Außendurchmesser von 10,4 mm aufweist, wobei ein außenseitiger Hüllschlauch hiervon 0,3 mm Wanddicke einnimmt.

In weiteren Ausführungsbeispielen können andere Abmessungen je nach verwendeten Materialien und geforderter Haltekraft realisiert sein.

Der Druckschlauch 2 kann bei der Erfindung aus einem einheitlichen Material oder als mehrlagiger Druckschlauch ausgebildet sein.

Der Schlauchnippel kann bei der Erfindung aus Metall oder aus Kunststoff oder aus einem anderen Material gefertigt sein, wobei Metall als Material bevorzugt ist, um die Beanspruchung beim Crimpen der Quetschhülse aufzunehmen.

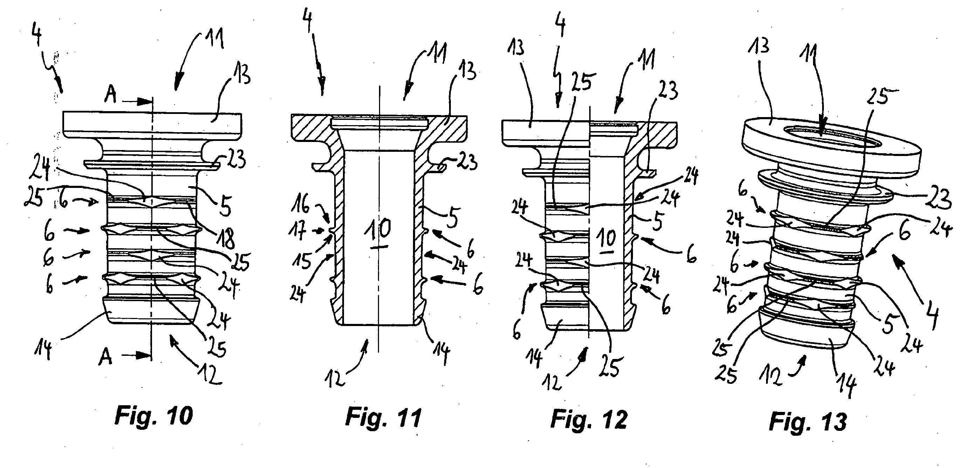

Fig. 10 bis 13 zeigen einen weiteren erfindungsgemäßen Schlauchnippel 4 in unterschiedlichen Ansichten und werden im Folgenden gemeinsam beschrieben.

Bauteile und Einzelheiten, welche funktionell und/oder konstruktiv gleich zu entsprechenden Bauteilen und Einzelheiten des Schlauchnippels gemäß Fig. 5 bis 9 sind, sind mit übereinstimmenden Bezugszeichen bezeichnet und nicht noch einmal gesondert beschrieben. Die Ausführungen zu den Fig. 5 bis 10, insbesondere bezüglich der Ausgestaltung der hier nicht weiter bezeichneten Halterippenprofile, Halterippenhöhen 19, Materialstärken und Axialabstände 21, gelten daher hier gleichermaßen.

Der Schlauchnippel 4 gemäß den Fig. 10 bis 13 unterscheidet sich von dem zuvor beschriebenen Schlauchnippel 4 dadurch, dass die Halterippen 6 an dem Nippelgrundkörper 5 nicht durchgängig umlaufend ausgebildet sind.

Vielmehr sind in jeder Halterippe 6 mehrere Unterbrechungen 24 ausgebildet, durch welche jede Halterippe 6 in Umfangsrichtung in eine Abfolge von Unterbrechungen 24 und Halterippensegmente 25 unterteilt wird.

Wie aus Fig. 11 und 12 näher ersichtlich ist, ist im Umfangsabschnitt der Unterbrechungen 24 durch eine Abflachung die Halterippenhöhe 19 (in Fig. 10 bis 13 nicht bezeichnet) auf das Niveau der Außenfläche des Nippelgrundkörpers 5 reduziert. Die Halterippenhöhe 19 wird hierbei in Umfangsrichtung von dem maximalen Wert an der Spitze 17 des Halterippenkamms 18 kontinuierlich auf das Niveau des Nippelgrundkörpers 5 vermindert, um anschließend in Umfangsrichtung wieder auf den maximalen Wert anzusteigen.

Die Unterbrechungen 24 sind dabei an benachbarten Halterippen 6 in Umfangsrichtung gegeneinander um einen Drehwinkel - hier von 90° - versetzt angeordnet und ausgebildet.

Hierdurch sind die Unterbrechungen 24 an dem Nippelgrundkörper 5 wechselständig oder gegenständig, im Ausführungsbeispiel kreuzgegenständig, ausgebildet.

Jede Halterippe 6 weist vier Unterbrechungen 24 auf, welche die Halterippe 6 in vier Halterippensegmente 25 unterteilen.

Jedes Halterippensegment 25 läuft daher in einem Umfangsabschnitt um den Nippelkörper um.

Die Halterippensegmente 25 sind daher an zwei benachbarten Halterippen 6 ebenfalls gegeneinander um einen Drehwinkel drehversetzt angeordnet.

Hierbei sind Umfangsabschnitte geschaffen, in denen sich die Unterbrechung 24 an einer Halterippe 6 mit Halterippensegmenten 25 an den benachbarten Halterippen 6 in axialer Richtung abwechseln.

Bei dem Schlauchnippel 4 für eine Schlauchanordnung 1 mit sich in Umfangsrichtung zumindest abschnittsweise erstreckenden, außenseitigen Halterippen 6 wird vorgeschlagen, die Halterippen 6 in Gestalt, Größe und Anordnung auf dem Nippelgrundkörper 5 so zwischen der Schlauchseite 12 und der Mündungsseite 11 des Schlauchnippels 4 zu variieren, dass sich ein gleichmäßiger, paralleler Krafteintrag von den Halterippen 6 in den Druckschlauch 2 ergibt, welcher die kraft- und/oder formschlüssige Verbindung zwischen dem Schlauchnippel 4 und dem aufgestecktem Druckschlauch 2 bewirkt.

## Patentansprüche

1. Schlauchnippel (4) für ein Schlauchanschlussstück (3) eines wasserführenden Systems, mit einem hülsenförmigen Nippelgrundkörper (5), welcher eine Mündungsseite (11) und eine Schlauchseite (12) aufweist, und innenseitig einen die Mündungsseite (11) und die Schlauchseite (12) verbindenden Durchströmkanal (10) aufnimmt, wobei an dem Nippelgrundkörper (5) außenseitig wenigstens drei, jeweils um den Nippelgrundkörper (5) zumindest abschnittsweise umlaufende, axial voneinander beabstandete Halterippen (6) angeformt sind, wobei der Nippelgrundkörper verjüngend mit einem zur Schlauchseite (11) hin abnehmenden Außendurchmesser ausgebildet ist, und wobei die Halterippen (6) mit ihren vom Nippelgrundkörper (5) abragenden Rippenkämmen (18) eine gedachte hülsen- oder schlauchförmige Hüllfläche beschreiben, deren Durchmesser zur Schlauchseite (12) abnimmt, und wobei jeweils benachbarte Halterippen (6) zueinander einen Axialabstand (21) aufweisen, **dadurch gekennzeichnet, dass** die Axialabstände (21) in der Abfolge der Halterippen (6) an dem Nippelgrundkörper (5) eine zur Schlauchseite (12) abnehmende Zahlenfolge bilden, dass die Halterippen (6) in einem Axialabschnitt des Schlauchnippels (4) ein Profil mit einer der Schlauchseite (12) zugewandten Vorderflanke (15) und einer der Mündungsseite (11) zugewandten Rückflanke (16) aufweist, dass zwischen der Vorderflanke (15) und der Rückflanke (16) ein Rippenkamm (18) der Halterippen (6) ausgebildet ist, dass die Vorderflanke (15) im Profil einen S-förmigen Verlauf hat und mit einem ersten Übergangsradius (R1) in den Nippelgrundkörper (5) übergeht, und dass die Rückflanke (16) gegenüber einer Senkrechten auf einer Außenfläche des Nippelgrundkörpers (5) geneigt ist und an ihrem Flankengrund mit einem zweiten Übergangsradius (R3) in den Nippelgrundkörper (5) übergeht.

2. Schlauchnippel (4) nach Anspruch 1, **dadurch gekennzeichnet, dass** der Nippelgrundkörper (5) außenseitig eine sich zur Schlauchseite (12) hin verjüngende Konusform aufweist.

3. Schlauchnippel (4) nach Anspruch 1 oder 2, **dadurch gekennzeichnet, dass** der erste Übergangsradius (R1) größer als der zweite Übergangsradius (R3)ist.

4. Schlauchnippel (4) nach einem der Ansprüche 1 bis 3, **dadurch gekennzeichnet, dass** die Halterippe (6) in einem Axialschnitt des Schlauchnippels ein krummlinig begrenztes, dreieckiges Profil mit einer abgerundeten, vom Nippelgrundkörper abragenden Spitze (17) aufweist.

5. Schlauchnippel (4) nach einem der Ansprüche 1 bis 4, **dadurch gekennzeichnet, dass** jede Halterippe (6) mit einer jeweiligen Halterippenhöhe (19) vom Nippelgrundkörper (5) abragt und dass die Halterippenhöhe (19) in der Abfolge der Halterippen (6) an dem Nippelgrundkörper (5) einen zur Schlauchseite (12) verbindenden Durchströmkanal (10) aufnimmt und wobei an dem Nippelgrundkörper (5) außenseitig wenigstens zwei axial voneinander beabstandete Halterippen (6) angeformt sind.

6. Schlauchnippel (4) nach einem der Ansprüche 1 bis 5, **dadurch gekennzeichnet, dass** der Durchströmkanal (10) zwischen der Schlauchseite (12) und der Mündungsseite (11) einen konstanten oder einheitlichen Innendurchmesser aufweist.

7. Schlauchnippel (4) nach einem der Ansprüche 1 bis 6, **dadurch gekennzeichnet, dass** die wenigstens eine Halterippe (6) an dem Nippelgrundkörper (5) durchgängig umlaufend ausgebildet ist.

8. Schlauchnippel (4) nach einem der Ansprüche 1 bis 7, **dadurch gekennzeichnet, dass** an der Halterippe (6) in Umfangsrichtung Unterbrechungen (24) ausgebildet sind.

9. Schlauchnippel (4) nach einem der Ansprüche 1 bis 8, **dadurch gekennzeichnet, dass** die Halterippenhöhe (19) einer Halterippe (6) in Umfangsrichtung im Bereich der Unterbrechungen (24) reduziert, vorzugsweise auf das Niveau des Nippelgrundkörpers (5), ausgebildet ist.

10. Schlauchnippel (4) nach einem der Ansprüche 1 bis 9, **dadurch gekennzeichnet, dass** die Unterbrechungen (24) an benachbarten Halterippen (6) gegeneinander um einen Drehwinkel drehversetzt ausgebildet sind.

11. Schlauchnippel (4) nach einem der Ansprüche 1 bis 10, **dadurch gekennzeichnet, dass** wenigstens ein Umfangsabschnitt an dem Nippelgrundkörper (5) geschaffen ist, in dem sich Unterbrechungen (24) an einer Halterippe (6) mit Halterippensegmenten (25) an den benachbarten Halterippen (6) in axialer Richtung abwechseln.

12. Schlauchanordnung (1) für ein wasserführendes System, mit einem Druckschlauch (2) und einem Schlauchanschlussstück (3), welches einen Schlauchnippel (4) und eine den Schlauchnippel (4) und den Druckschlauch (2) umgreifende Quetschhülse (7) aufweist, wobei der Druckschlauch (2) zwischen der Quetschhülse (7) und dem Schlauchnippel (4) kraft- und/oder formschlüssig gehalten ist, **dadurch gekennzeichnet, dass** der Schlauchnippel (4) nach einem der Ansprüche 1 bis 11 ausgebildet ist.

13. Schlauchanordnung (1) nach Anspruch 12, **dadurch gekennzeichnet, dass** die Quetschhülse (7) einen Crimpabschnitt (22) aufweist, welcher sich axial wenigstens bis zur axialen Position der Schlauchseite (12) des Schlauchnippels (4) erstreckt.

14. Schlauchanordnung (1) nach Anspruch 12 oder 13, **dadurch gekennzeichnet, dass** jede Halterippe (6) den aufgesteckten Druckschlauch (2) jeweils auf eine verbleibende radiale Materialstärke (20) reduziert und dass die verbleibenden radialen Materialstärken (20) in der Abfolge der Halterippen (6) an dem Nippelgrundkörper (5) eine zur Schlauchseite (12) zunehmende Zahlenfolge bilden.

15. Schlauchanordnung (1) nach einem der Ansprüche 12 bis 14, **dadurch gekennzeichnet, dass** die oder eine Halterippenhöhe (19) einer ersten Halterippe (6) und die oder eine Halterippenhöhe (19) einer mündungsseitig benachbarten Halterippe (6) im Verhältnis so zueinander und zu dem oder einem Axialabstand (21) der ersten Halterippe (6) zur mündungsseitig benachbarten Halterippe (6) gewählt sind, dass die von dem Druckschlauch (2) im Bereich der ersten Halterippe (6) mit der reduzierten Materialstärke (20) aufnehmbare Zugkraft wenigstens gleich oder genau gleich der Summe der von dem Druckschlauch (2) im Bereich der mündungsseitig benachbarten Halterippe (6) mit der reduzierten Materialstärke (20) aufnehmbaren Zugkraft und der von dem Druckschlauch (2) im Bereich zwischen der ersten Halterippe (6) und der mündungsseitig benachbarten Halterippe (6) aufnehmbaren Scherkraft ist.

## Claims

1. Hose nipple (4) for a hose connecting piece (3) of a water supply system, said hose nipple having a sleeve-shaped nipple base body (5) which has an outlet end (11) and a hose end (12) and on the inside accommodates a through-flow channel (10) which connects the outlet end (11) and the hose end (12), wherein at least three holding ribs (6), which in each case extend around the nipple base body (5) at least in portions and are axially spaced apart from one another, are integrally formed on the outside of the nipple base body (5), wherein the nipple base body (5) is formed in a tapering manner with an outer diameter which decreases towards the hose end (11), and wherein the holding ribs (6) with their rib crests (18) protruding from the nipple base body (5) describe an imaginary sleeve-shaped or hose-shaped enveloping surface, the diameter of which decreases towards the hose end (12), and wherein in each case adjacent holding ribs (6) are at an axial spacing (21) from each other, **characterised in that** the axial spacings (21) in the sequence of the holding ribs (6) on the nipple base body (5) form a number sequence which decreases toward the hose end (12), **in that** in an axial section of the hose nipple (4), the holding ribs (6) have a profile with a front flank (15) which faces the hose end (12) and a rear flank (16) which faces the outlet end (11), **in that** a rib crest (18) of the holding ribs (6) is formed between the front flank (15) and the rear flank (16), **in that** the front flank (15) extends in an S-shape in profile and merges into the nipple base body (5) at a first transition radius (R1), and **in that** the rear flank (16) is inclined in relation to a perpendicular on an outer face of the nipple base body (5) and at its flank bottom merges into the nipple base body (5) at a second transition radius (R3).

2. Hose nipple (4) as claimed in claim 1, **characterised in that** on the outside the nipple base body (5) is in the form of a cone which tapers towards the hose end (12).

3. Hose nipple (4) as claimed in claim 1 or 2, **characterised in that** the first transition radius (R1) is greater than the second transition radius (R3).

4. Hose nipple (4) as claimed in any one of claims 1 to 3, **characterised in that**, in an axial section of the hose nipple, the holding rib (6) has a triangular profile which is defined in a curvilinear manner with a rounded-off tip (17) which protrudes from the nipple base body.

5. Hose nipple (4) as claimed in any one of claims 1 to 4, **characterised in that** each holding rib (6) protrudes from the nipple base body (5) by a respective holding rib height (19), and **in that** the holding rib height (19) in the sequence of the holding ribs (6) on the nipple base body (5) accommodates a through-flow channel (10) connecting to the hose end (12), and wherein at least two axially spaced apart holding ribs (6) are integrally formed on the outside of the nipple base body (5).

6. Hose nipple (4) as claimed in any one of claims 1 to 5, **characterised in that** the through-flow channel (10) has a constant or uniform inner diameter between the hose end (12) and the outlet end (11).

7. Hose nipple (4) as claimed in any one of claims 1 to 6, **characterised in that** the at least one holding rib (6) is formed so as to extend continuously around the nipple base body (5).

8. Hose nipple (4) as claimed in any one of claims 1 to 7, **characterised in that** interruptions (24) are formed on the holding rib (6) in the circumferential direction.

9. Hose nipple (4) as claimed in any one of claims 1 to 8, **characterised in that** the holding rib height (19) of one holding rib (6) is reduced in the circumferential direction in the region of the interruptions (24), preferably to the level of the nipple base body (5).

10. Hose nipple (4) as claimed in any one of claims 1 to 9, **characterised in that** the interruptions (24) on adjacent holding ribs (6) are rotationally offset with respect to one another by an angle of rotation.

11. Hose nipple (4) as claimed in any one of claims 1 to 10, **characterised in that** on the nipple base body (5) at least one circumferential section is created in which interruptions (24) on one holding rib (6) alternate in the axial direction with holding rib segments (25) on the adjacent holding ribs (6).

12. Hose arrangement (1) for a water supply system, said hose arrangement having a pressure hose (2) and a hose connecting piece (3) which has a hose nipple (4) and a crimping sleeve (7) which engages around the hose nipple (4) and the pressure hose (2), wherein the pressure hose (2) is held in a force-fitting and/or form-fitting manner between the crimping sleeve (7) and the hose nipple (4), **characterised in that** the hose nipple (4) is formed as claimed in any one of claims 1 to 11.

13. Hose arrangement (1) as claimed in claim 12, **characterised in that** the crimping sleeve (7) has a crimping section (22) which extends axially at least to the axial position of the hose end (12) of the hose nipple (4).

14. Hose arrangement (1) as claimed in claim 12 or 13, **characterised in that** each holding rib (6) reduces the fitted pressure hose (2) in each case to a remaining radial material thickness (20), and **in that** the remaining radial material thicknesses (20) in the sequence of the holding ribs (6) on the nipple base body (5) form a number sequence which increases towards the hose end (12).

15. Hose arrangement (1) as claimed in any one of claims 12 to 14, **characterised in that** the or a holding rib height (19) of a first holding rib (6) and the or a holding rib height (19) of a holding rib (6) adjacent on the outlet end are chosen in such a manner in relation to one another and in relation to the or an axial spacing (21) between the first holding rib (6) and the holding rib (6) adjacent on the outlet end that the tensile force which can be absorbed by the pressure hose (2) in the region of the first holding rib (6) with the reduced material thickness (20) is at least identical or precisely identical to the sum of the tensile force which can be absorbed by the pressure hose (2) in the region of the holding rib (6) adjacent on the outlet end with the reduced material thickness (20) and of the shear force which can be absorbed by the pressure hose (2) in the region between the first holding rib (6) and the holding rib (6) adjacent on the outlet end.

## Revendications

1. Raccord de tuyau flexible (4) pour un élément de raccordement de tuyau flexible (3) d'un système de transport d'eau, avec un corps de base de raccord en forme de douille (5), qui présente un côté d'embouchure (11) et un côté de tuyau flexible (12), et qui contient intérieurement un canal d'écoulement (10) reliant le côté d'embouchure (11) et le côté de tuyau flexible (12), dans lequel au moins trois nervures de retenue (6), s'étendant chacune au moins localement autour du corps de base de raccord (5) et espacées axialement l'une de l'autre, sont formées extérieurement sur le corps de base de raccord (5), dans lequel le corps de base de raccord se rétrécit avec un diamètre extérieur décroissant en direction du côté de tuyau flexible (11), et dans lequel les nervures de retenue (6) décrivent avec leurs crêtes de nervures (18) saillantes sur le corps de base de raccord (5) une surface d'enveloppe imaginaire en forme de douille ou de tuyau flexible, dont le diamètre diminue en direction du côté de tuyau flexible (12), et dans lequel des nervures de retenue (6) respectivement voisines présentent une distance axiale (21) l'une de l'autre, **caractérisé en ce que** les distances axiales (21) forment dans la succession des nervures de retenue (6) sur le corps de base de raccord (5) une suite de nombres décroissante vers le côté de tuyau flexible (12), **en ce que** les nervures de retenue (6) présentent dans une partie axiale du raccord de tuyau flexible (4) un profil avec un flanc avant (15) tourné vers le côté de tuyau flexible (12) et un flanc arrière (16) tourné vers le côté d'embouchure (11), **en ce qu'**une crête de nervure (18) des nervures de retenue (6) est formée entre le flanc avant (15) et le flanc arrière (16), **en ce que** le flanc avant (15) présente en profil une allure en forme de S et se prolonge dans le corps de base de raccord (5) avec un premier rayon de transition (R1), et **en ce que** le flanc arrière (16) est incliné par rapport à une perpendiculaire à une face extérieure du corps de base de raccord (5) et se prolonge à son pied de flanc dans le corps de base de raccord (5) avec un deuxième rayon de transition (R3).

2. Raccord de tuyau flexible (4) selon la revendication 1, **caractérisé en ce que** le corps de base de raccord (5) présente extérieurement une forme de cône décroissante en direction du côté de tuyau flexible (12).

3. Raccord de tuyau flexible (4) selon la revendication 1 ou 2, **caractérisé en ce que** le premier rayon de transition (R1) est plus grand que le deuxième rayon de transition (R3).

4. Raccord de tuyau flexible (4) selon l'une quelconque des revendications 1 à 3, **caractérisé en ce que** la nervure de retenue (6) présente, dans une coupe axiale du raccord de tuyau flexible, un profil triangulaire limité en courbe, avec une pointe arrondie (17) saillante sur le corps de base de raccord.

5. Raccord de tuyau flexible (4) selon l'une quelconque des revendications 1 à 4, **caractérisé en ce que** chaque nervure de retenue (6) est saillante sur le corps de base de raccord (5) avec une hauteur de nervure de retenue respective (19) et **en ce que** la hauteur de nervure de retenue (19) contient dans la succession des nervures de retenue (6) sur le corps de base de raccord (5) un canal d'écoulement (10) reliant au côté de tuyau flexible (12) et dans lequel au moins deux nervures de retenue (6) axialement espacées l'une de l'autre sont formées sur le corps de base de raccord (5).

6. Raccord de tuyau flexible (4) selon l'une quelconque des revendications 1 à 5, **caractérisé en ce que** le canal d'écoulement (10) présente entre le côté de tuyau flexible (12) et le côté d'embouchure (11) un diamètre intérieur constant ou unitaire.

7. Raccord de tuyau flexible (4) selon l'une quelconque des revendications 1 à 6, **caractérisé en ce que** ladite au moins une nervure de retenue (6) est formée en continu en périphérie sur le corps de base de raccord (5).

8. Raccord de tuyau flexible (4) selon l'une quelconque des revendications 1 à 7, **caractérisé en ce que** des interruptions en direction périphérique (24) sont formées dans la nervure de retenue (6).

9. Raccord de tuyau flexible (4) selon l'une quelconque des revendications 1 à 8, **caractérisé en ce que** la hauteur de nervure de retenue (19) d'une nervure de retenue (6) est réduite dans la région des interruptions (24), de préférence au niveau du corps de base de raccord (5).

10. Raccord de tuyau flexible (4) selon l'une quelconque des revendications 1 à 9, **caractérisé en ce que** les interruptions (24) sont formées avec un décalage angulaire tournant l'une par rapport à l'autre dans des nervures de retenue voisines (6).

11. Raccord de tuyau flexible (4) selon l'une quelconque des revendications 1 à 10, **caractérisé en ce qu'**il se trouve au moins une partie périphérique sur le corps de base de raccord (5), dans laquelle des interruptions (24) dans une nervure de retenue (6) alternent en direction axiale avec des segments de nervures de retenue (25) dans les nervures de retenue voisines (6).

12. Système de tuyau flexible (1) pour un système de transport d'eau, avec un tuyau flexible sous pression (2) et un élément de raccordement de tuyau flexible (3), qui présente un raccord de tuyau flexible (4) et une douille de serrage (7) entourant le raccord de tuyau flexible (4) et le tuyau flexible sous pression (2), dans lequel le tuyau flexible sous pression (2) est maintenu par adhérence et/ou par emboîtement entre la douille de serrage (7) et le raccord de tuyau flexible (4), **caractérisé en ce que** le raccord de tuyau flexible (4) est configuré selon l'une quelconque des revendications 1 à 11.

13. Système de tuyau flexible (1) selon la revendication 12, **caractérisé en ce que** la douille de serrage (7) présente une partie de sertissage (22), qui s'étend axialement au moins jusqu'à la position axiale du côté de tuyau flexible (12) du raccord de tuyau flexible (4).

14. Système de tuyau flexible (1) selon la revendication 12 ou 13, **caractérisé en ce que** chaque nervure de retenue (6) réduit le tuyau flexible sous pression (2) engagé chaque fois à une épaisseur de matière radiale restante (20) et **en ce que** les épaisseurs de matière radiales restantes (20) forment dans la succession des nervures de retenue (6) sur le corps de base de raccord (5) une suite de nombres croissante en direction du côté de tuyau flexible (12).

15. Système de tuyau flexible (1) selon l'une quelconque des revendications 12 à 14, **caractérisé en ce que** la ou une hauteur de nervure de retenue (19) d'une première nervure de retenue (6) et la ou une hauteur de nervure de retenue (19) d'une nervure de retenue (6) voisine du côté d'embouchure sont choisies dans un rapport l'une par rapport à l'autre et par rapport à la ou à une distance axiale (21) de la première nervure de retenue (6) à la nervure de retenue (6) proche du côté d'embouchure, tel que la force de traction acceptable par le tuyau flexible sous pression (2) dans la région de la première nervure de retenue (6) avec l'épaisseur de matière réduite (20) soit au moins égale ou exactement égale à la somme de la force de traction acceptable par le tuyau flexible sous pression (2) dans la région de la nervure de retenue (6) voisine du côté d'embouchure avec l'épaisseur de matière réduite (20) et de la force de cisaillement acceptable par le tuyau flexible sous pression (2) dans la région située entre la première nervure de retenue (6) et la nervure de retenue (6) voisine du côté d'embouchure.
